# EUROPÄISCHE PATENTANMELDUNG

(11) **EP 3 747 619 A1**
(43) Veröffentlichungstag der Anmeldung: **09.12.2020**
(21) Anmeldenummer: 20174863.9
(22) Anmeldetag: 15.05.2020
(51) Int. Cl.: B29C 48/255, B29C 48/68, B29C 48/80

(54) **VORRICHTUNG ZUMINDEST ZUM KÜHLEN EINES ZYLINDERS EINES EXTRUDERS**

(30) Priorität: 06.06.2019 DE 102019115323
(71) Anmelder: Weber, Johannes, 96317 Kronach (DE)
(72) Erfinder: Weber, Johannes, 96317 Kronach (DE)
(74) Vertreter: Schaumburg und Partner Patentanwälte mbB

(57) **Zusammenfassung**

Eine Vorrichtung (18, 20) zumindest zum Kühlen eines Zylinders (14) eines Extruders (10) hat einen in einem Bereich längs des Zylinders (14) des Extruders (10) anordenbaren Strömungskanal (52) und ein Gebläse (88) zum Zuführen eines Kühlluftstroms in den Strömungskanal (52). Zwischen dem Gebläse (88) und dem Strömungskanal (52) ist mindestens ein Absperrmittel (104) angeordnet.

## Beschreibung

Die Erfindung betrifft eine Vorrichtung zum Kühlen oder zum Kühlen und Heizen eines Zylinders eines Extruders, mit einem in einem Bereich längs des Zylinders des Extruders anordenbaren Strömungskanal und mit einem Gebläse zum Zuführen eines Kühlluftstroms in den Strömungskanal. Die Vorrichtung dient insbesondere zum Reduzieren von Wärmeverlusten bei einer Kühlvorrichtung zum Kühlen eines Zylinders eines Extruders. Weiterhin betrifft die Erfindung eine Anordnung mit einem Extruder und mindestens einer erfindungsgemäßen Vorrichtung.

Vorrichtungen zum Kühlen und Heizen eines Zylinders eines Extruders dienen dazu, den Zylinder des Extruders auf die für die Verarbeitung von Kunststoffgranulat erforderliche Temperatur aufzuheizen und Wärmeverluste durch Wärmeabgabe an die Umgebung auszugleichen sowie eine beim Verarbeitungsprozess des Kunststoffes entstehende Wärme mittels Kühlluft abzuführen. Die Wärme im Zylinder des Extruders entsteht insbesondere durch eine Bewegung der Extruderschnecke bzw. der Extruderschnecken. Durch das Heizen und Kühlen wird eine konstante Temperatur aufrechterhalten.

Heiz-Kühl-Kombinationen sind insbesondere aus dem Dokument DE 20 2014 103 763 U1 bekannt. An der Oberseite des Gehäuses der Heiz-Kühl-Kombination ist ein Lüfter angeordnet. An der unteren Seite des Gehäuses, an der der erwärmte Kühlluftstrom austritt, sind Klappen vorgesehen, über die die erwärmte Kühlluft austritt.

Aus dem Dokument DE 694 04 872 T2 ist eine Vorrichtung zur Kühlung eines Zylinders eines Extruders mit Kühlluft bekannt, bei der ein Kühlluftstrom besonders gut um den Zylinder herum verteilt wird.

Auf Grund der im Wesentlichen senkrechten Anordnungen des Strömungskanals für die Kühlluft entsteht ein Kamineffekt, welchen auch bei Stillstand des Lüfters zu Wärmeverlusten führt. Hierbei kann das Gebläse sowohl unterhalb als auch oberhalb des Strömungskanals angeordnet sein. Lediglich bei waagrechter Anordnung entsteht dieser Verlust nicht, diese Anordnung wird aber nur in den seltensten Anwendungen gewählt.

Aufgabe der Erfindung ist es, eine Vorrichtung zum Kühlen eines Zylinders eines Extruders anzugeben, durch die Wärmeverluste beim Betrieb des Extruders verringert werden können.

Diese Aufgabe wird durch eine Vorrichtung mit den Merkmalen des Anspruchs 1 gelöst. Vorteilhafte Weiterbildungen sind in den abhängigen Ansprüchen angegeben.

Durch eine Vorrichtung mit den Merkmalen des Anspruchs 1 ist es möglich, den Strömungskanal, der vorzugsweise durch mindestens ein Gehäuseelement der Vorrichtung gebildet ist, mit Hilfe des Absperrmittels abzusperren, wenn das Gebläse keinen Kühlluftstrom erzeugt. Dadurch wird insbesondere ein auf Konvektion basierender Luftstrom durch den Strömungskanal hindurch verhindert, wenn der Zylinder des Extruders nicht gekühlt werden soll. Durch das Anordnen des Absperrmittels zwischen Gebläse und Strömungskanal ist das Absperrmittel im Zuluftstrom, d.h. in dem durch das Gebläse erzeugten, dem Strömungskanal zugeführten Luftstrom und nicht im Abluftstrom, d.h. in dem aus dem Strömungskanal austretenden stark erwärmten Luftstrom angeordnet. Hierdurch sind ein einfacherer Aufbau und eine einfachere Handhabung möglich. Besonders vorteilhaft ist es, wenn das Absperrmittel und/oder das Gebläse unterhalb des Strömungskanals angeordnet sind. Durch die Erwärmung des Luftstroms im Strömungskanal und dem nachfolgenden Austritt, vorzugsweise an der Oberseite des Strömungskanals, wird im Strömungskanal selbst ein auf Konvektion basierender Luftstrom erzeugt, der den mit Hilfe des Gebläses erzeugten Kühlstrom unterstützt und zumindest nicht, wie bei im Stand der Technik bekannten Kühlanordnungen zum Kühlen eines Zylinders eines Extruders üblich, dem zugeführten Luftstrom entgegenwirken.

Es sind Anordnungen bekannt, bei denen mindestens ein Absperrmittel vorgesehen ist, das in Strömungsrichtung der Kühlluft am der Ausblasseite angeordnet ist. Vorzugsweise verschließt das Absperrmittel im geschlossenen Zustand die Öffnung vollständig. Im geöffneten Zustand des Absperrmittels gibt das Absperrmittel die Öffnung frei, so dass Kühlluft durch das Absperrmittel hindurchströmen kann.

Besonders vorteilhaft ist es, wenn das Absperrmittel eine um eine Drehachse schwenkbare Klappe oder einen Schieber umfasst. Hierdurch ist eine einfache und kostengünstige sowie effiziente Ausführung des Absperrmittels möglich.

Besonders vorteilhaft ist es, wenn die Klappe nicht elastisch verformbar ist und über ein Scharnier oder ein Gelenk verschwenkbar angeordnet ist. Die Klappe kann hierbei verschwenkbar am Gehäuse und/oder am Gebläse oder an dem Gehäuse eines Zwischenelements zwischen Gebläse und Gehäuse angeordnet sein. Hierdurch ist ein einfacher und kostengünstiger Aufbau des Absperrmittels möglich.

Ferner ist es vorteilhaft, wenn die Klappe elastisch verformbar ist und an einer Seite fest mit einem die Klappenöffnung umgebenden Rahmen und mit den anderen Seiten im geschlossenen Zustand auf dem die Klappenöffnung umgebenden Rahmen aufliegt. Hierdurch ist ein einfacher und kostengünstiger Aufbau sowie ein relativ dichter Verschluss einer Durchlassöffnung zwischen Gebläse und Strömungskanal mit Hilfe der elastischen Klappe möglich. Ferner ist es besonders vorteilhaft, wenn die Klappe derart angeordnet und ausgebildet ist, dass der durch das Gebläse erzeugte Kühlluftstrom die Klappe öffnet und dass die Klappe ohne Kühlluftstrom geschlossen ist. Hierdurch wird die Klappe automatisch geöffnet und geschlossen, so dass keine weiteren Bedienhandlungen oder Antriebsmittel vorgesehen sein müssen. Die Klappe ist vorzugsweise derart ausgebildet und angeordnet, dass sie bei Unterbrechung des Kühlluftstromes automatisch durch die Schwerkraft schließt.

Ferner ist es vorteilhaft, wenn die Klappe derart ausgebildet und angeordnet ist, dass sie ohne Kühlluftstrom durch die Schwerkraft und/oder durch ein beim Öffnen verformtes elastisch verformbares Element schließt. Ein solches elastisch verformbares Element kann insbesondere eine Feder sein. Hierdurch wird sichergestellt, dass die Klappe im geschlossenen Zustand verbleibt und die durch die Klappe freigebbare Durchlassöffnung im geschlossenen Zustand der Klappe sicher verschlossen ist.

Besonders vorteilhaft ist es, wenn der Strömungskanal eine hohlzylindrische Öffnung zur Aufnahme eines Abschnitts des Zylinders des Extruders hat. Hierdurch ist eine einfache Anordnung des Strömungskanals um den Zylinder herum möglich, so dass eine Kühlung der gesamten Mantelfläche des Zylinders einfach möglich ist. Der Strömungskanal kann insbesondere aus mehreren Teilen zusammengesetzt sein, die um den Abschnitt des Zylinders des Extruders herum angeordnet und miteinander verbunden werden. Hierdurch ist eine besonders einfache Montage des Strömungskanals um den Zylinder des Extruders herum möglich.

Ferner ist es vorteilhaft, wenn das Absperrmittel eine Membran umfasst, die einen Bereich umfasst, der durch den vom Gebläse erzeugten Kühlluftstrom derart elastisch verformbar ist, dass eine Durchlassöffnung entsteht und dass die Durchlassöffnung ohne Luftstrom wieder schließt. Insbesondere kann in der Membran ein Schnitt vorgesehen sein, wobei die angrenzenden Membranabschnitte im Bereich des Schnitts ohne Kühlluftstrom aneinander anliegen und keine Durchlassöffnung freigeben und mit Kühlluftstrom die Membran zumindest im Bereich des Schnitts derart elastisch verformt wird, dass eine Durchlassöffnung entsteht. Hierdurch ist eine einfache und effiziente Anordnung der Klappe ohne mechanische Elemente möglich. Diese Ausführung des Absperrmittels ist besonders wartungsarm.

Ferner ist es besonders vorteilhaft, wenn das Absperrmittel zwischen einer Flanschöffnung des Strömungskanals und einer Flanschöffnung des Gebläses angeordnet ist. Hierdurch ist eine sehr einfache Montage des Absperrmittels zwischen den Flanschen des Strömungskanals und Gebläses möglich. Hierbei ist es möglich, dass das Absperrmittel als Zwischenflanschanordnung ausgebildet ist. Alternativ kann das Absperrmittel mit einem ersten Flansch zum Verbinden mit dem Flansch des Strömungskanals und mit einem zweiten Flansch zum Verbinden mit dem Flansch des Gebläses ausgebildet sein. Ferner ist es sehr vorteilhaft, wenn das Absperrmittel eine verschließbare Durchlassöffnung mit einem rechteckigen Querschnitt hat. Hierdurch ist eine einfache Fertigung es Absperrmittels in Form einer rechteckigen bzw. quadratischen Klappe sowie eine einfache Fertigung von Flanschen des Absperrmittels, eines Rahmens bei einer Ausbildung des Absperrmittels als Zwischenflanschanordnung sowie eine einfache Verbindung des Absperrmittels zum Strömungskanal und zum Gebläse möglich.

Alternativ oder zusätzlich kann das Absperrmittel als Einsteckelement ausgebildet sein, das in eine Einschuböffnung des Strömungskanals der Vorrichtung, insbesondere in eine Einschuböffnung im Zuführstutzen des Strömungskanals der Vorrichtung, einschiebbar ist. Hierdurch ist eine einfache Installation und/oder Austausch des Absperrmittels möglich.

Ein zweiter Aspekt der Erfindung betrifft eine Anordnung mit einem Extruder, der einen Zylinder hat und mit mindestens einer Vorrichtung nach Anspruch 1 oder einem der zuvor angegebenen Weiterbildungen. Der Strömungskanal der Vorrichtung umschließt dabei einen Abschnitt des Zylinders zumindest teilweise. Besonders vorteilhaft ist es, wenn mehrere Vorrichtungen vorgesehen sind, die mehrere in Längsrichtung des Zylinders hintereinander angeordnet sind, wobei der Strömungskanal der Vorrichtungen jeweils einen Abschnitt des zylinderförmigen Bereichs zumindest teilweise umschließen. Hierdurch ist eine einfache Kühlung des Zylinders des Extruders möglich.

Besonders vorteilhaft ist es, wenn der Strömungskanal der Vorrichtung den Abschnitt des Zylinders vollständig umschließt. Hierdurch ist eine einfache und wirkungsvolle Kühlung des Zylinders möglich, so dass eine hohe Qualität des extrudierten Kunststoffs erreicht wird.

Durch das Anordnen des Absperrmittels zwischen Gebläse und Strömungskanal ist eine aufwändige separate Anordnung der Klappen, wie dies beispielsweise bei der aus dem Dokument DE 20 2014 103 763 U1 angegebenen Klappenanordnung erforderlich ist, nicht notwendig. Durch das Absperrmittel wird insbesondere das Nachströmen von Kühlluft verhindert oder zumindest minimiert, wodurch in der Praxis eine erhebliche Reduzierung von Wärmeverlusten bei nicht aktivem Gebläse erreicht wird. Die Absperrmittel verhindern somit das Nachströmen von kalter Luft bei deaktiviertem Gebläse. Insbesondere wird ein Kamineffekt bei nicht aktivem Gebläse verhindert, wodurch der Wärmeverlust beim Extrusionsprozess reduziert ist. Die Klappe wird vorzugsweise derart ausgerichtet und positioniert, dass bei aktivem Gebläse ein nur geringer Strömungswiderstand erzeugt wird. Die Vorrichtung kann insbesondere bei vorhandenen Extrudern und bei vorhandenen Kühlvorrichtungen einfach nachgerüstet werden, indem ein Absperrmittel zwischen Gebläse und Strömungskanal nachgerüstet wird. Besonders vorteilhaft ist es, wenn das Absperrmittel lediglich zwei Blechelemente umfasst, einen ersten Rahmen zur Montage des Absperrmittels zwischen Strömungskanal und Gebläse und eine mit dem Rahmen verbundene schwenkbare Klappe.

Nachfolgend werden weitere Merkmale und Vorteile anhand von Ausführungsformen in Verbindung mit den beigefügten Figuren beschrieben.

### Es zeigt:

- Fig.1: eine Seitenansicht eines Extruders;
- Fig.2: eine Vorderansicht einer Heiz- und Kühlvorrichtung zum Heizen und Kühlen eines Zylinders des Extruders nach Fig.1;
- Fig.3: eine Schnittdarstellung der Heiz- und Kühlvorrichtung nach Fig.2 entlang der Schnittlinie A-A;
- Fig.4: eine Klappeneinheit mit einer geschlossenen Verschlussklappe; und
- Fig.5: die Klappeneinheit nach Fig.3 mit einer geöffneten Verschlussklappe.

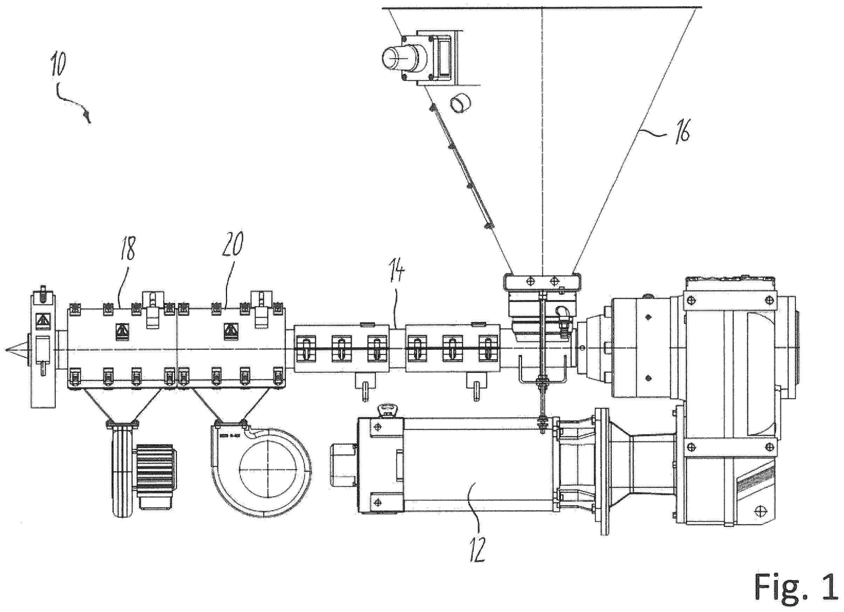

Fig.1 zeigt eine Seitenansicht eines Extruders 10, der eine im Inneren eines Zylinders 14 angeordnete nicht sichtbare Extruderschnecke umfasst, die mit Hilfe einer Antriebseinheit 12 antreibbar ist. Die Extruderschnecke kann als Einzel- oder als Doppelschnecke ausgeführt sein. Ferner umfasst der Extruder 10 zwei Heiz- und Kühlvorrichtungen 18, 20, die den Zylinder 14 in einem Teilbereich jeweils umschließen.

Oberhalb des Zylinders 14 ist ein Befülltrichter 16 zum Zuführen von zu verarbeitendem Kunststoffmaterial angeordnet. Der Extruder 10 kann ferner mindestens einen Temperatursensor, eine Vakuumpumpe, eine gravimetrische Dosiereinheit sowie eine Düse zur Formgebung des Extrusionsproduktes umfassen.

Andere Extruder können nur eine Heiz- und Kühlvorrichtung oder mehr als eine zwei, insbesondere drei oder vier Heiz- und Kühlvorrichtungen umfassen. Mit Hilfe des Extruders 10 werden insbesondere thermoplastische oder vernetzbare thermoplastische Kunststofferzeugnisse hergestellt.

Beim Drehen der Extruderschnecke mit Hilfe der Antriebseinheit 12 wird der Kunststoff im Inneren des Zylinders 14 unter Einwirkung der Wärme des Zylinders 14 zusammengepresst, wobei sowohl durch die Drehbewegung der Schnecke als auch durch die Krafteinwirkung auf den Kunststoff Wärme entsteht, wodurch die Temperatur des Zylinders 14 auch ohne aktive Heizung der Heiz- und Kühlvorrichtungen 18, 20 auf Solltemperatur gehalten wird oder bei Überschreiten der gewünschten Solltemperatur mit Hilfe der Heiz- und Kühlvorrichtungen 18, 20 gekühlt werden muss, um die Solltemperatur nicht zu überschreiten. In der Praxis ist es oft ausreichend, wenn der Extrusionsprozess nach dem Aufheizen des Zylinders 14 auf eine Mindesttemperatur gestartet und erst beim Überschreiten einer höheren oberen Solltemperatur gekühlt wird. Hierdurch sind eine einfache Steuerung sowie ein energieeffizienter Betrieb des Extruders 10 möglich.

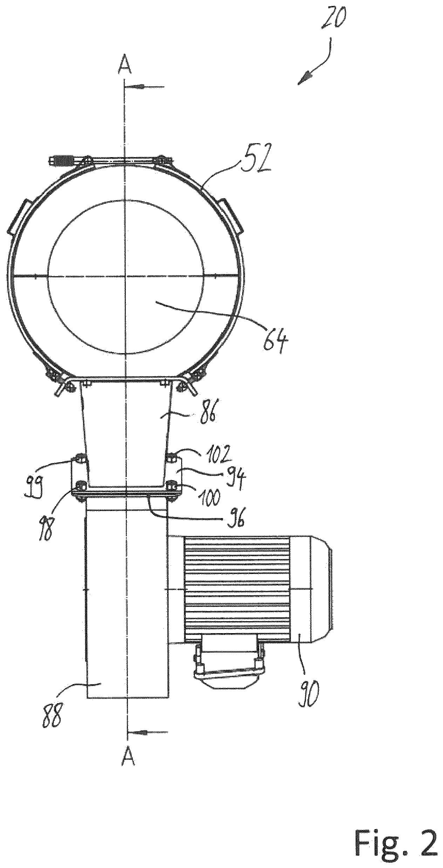

Fig.2 zeigt eine Ansicht der Heiz- und Kühlvorrichtung 20 zum Heizen und Kühlen des Zylinders 14 des Extruders 10 nach Fig.1. Die Heiz- und Kühlvorrichtung 20 hat ein als Strömungskanal dienendes Gehäuse 52, in dessen Inneren Kühlelemente 54 angeordnet sind, die die Mantelfläche des Zylinders 14 im Bereich des Gehäuses 52 kontaktieren. Das Gehäuse 52 ist aus mehreren Gehäuseelementen zusammengesetzt, die mit Hilfe von Verschlusselementen 66 bis 72 verschlossen sind.

An der Unterseite des Gehäuses 52 ist ein trichterförmiger Anschlussstutzen 86 zum Zuführen von Kühlluft zu den Kühlelementen 54 vorgesehen. Ferner umfasst die Heiz- und Kühlvorrichtung 20 ein Gebläse 88, das über einen Elektromotor 90 angetrieben wird und das Kühlluft über eine Ansaugöffnung 92 ansaugt und bei Aktivierung des Motors 90 Kühlluft in den Kühlluftstutzen 86 bläst. Hierbei wird ein Kühlluftstrom durch den Kühlluftstutzen 86 und die Kühlelemente 54 hindurch erzeugt, wobei die erwärmte Kühlluft an der Oberseite des Gehäuses 52 in einem durch die Verschlusselemente 66 bis 76 überbrückten Bereich wieder austritt. Zum besseren Wärmeaustausch haben die Kühlelemente 54 bis 62 Kühlrippen, so dass die Kühlluft an den Kühlrippen von unten nach oben vorbeigeführt wird, wodurch ein effizienter Wärmeaustausch und somit ein hoher Wirkungsgrad der Kühlelemente 54 erreicht wird.

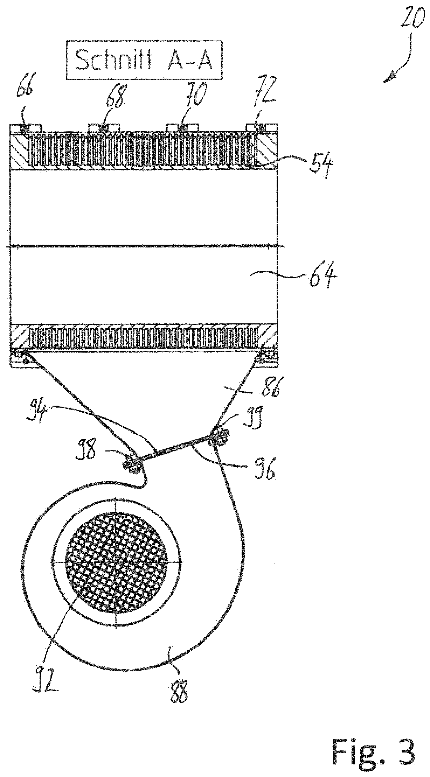

Fig.3 zeigt eine Schnittdarstellung der Heiz- und Kühlvorrichtung 20 nach Fig.2 entlang der Schnittlinie A-A.

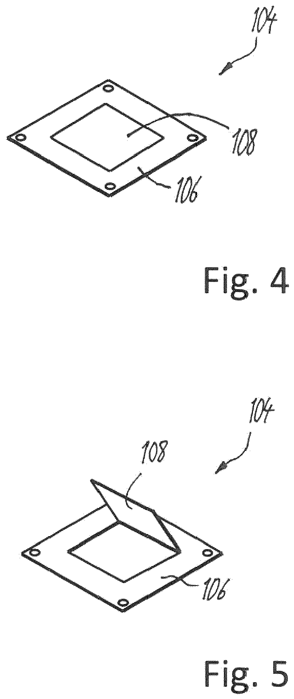

Das Gebläse 88 hat einen kühlluftaustrittseitigen Anschlussflansch 94 und der Stutzen 86 hat einen eintrittsseitigen Anschlussflansch 96, wobei die Flansche 94, 96 komplementär zueinander ausgebildet sind und über insgesamt vier Schrauben 98, 99, 100, 102 luftdicht miteinander verbindbar sind. Zwischen den Flanschen 94, 96 ist ein Klappenelement 104 mit einem Rahmen 106 und einer am Rahmen schwenkbar angeordneten Klappe 108 angeordnet. Die Klappe 108 ist in Fig.4 im geschlossenen Zustand und in Fig.5 im geöffneten Zustand gezeigt. Die Klappe 108 wird bei Aktivierung des Gebläses 84 durch den vom Gebläse 84 erzeugte Kühlluftstrom vom geschlossenen Zustand in den geöffneten Zustand bewegt, wobei die Klappe 108 durch die Schwerkraft automatisch wieder geschlossen wird, wenn das Gebläse 88 keinen Kühlluftstrom mehr erzeugt.

### Bezugszeichenliste

- 10: Extruder
- 12: Antriebseinheit
- 14: Zylinder
- 16: Befülltrichter
- 18, 20: Heiz- und Kühlvorrichtung
- 52: Gehäuse
- 54: Kühlelement
- 64: Kontaktbereich zum Zylinder
- 66 bis 72: Verschlusselement
- 86: Kühlluftstutzen
- 88: Gebläse
- 90: Antriebsmotor
- 92: Ansaugöffnung
- 94, 96: Flansch
- 98, 100, 102: Schrauben
- 104: Klappeneinheit
- 106: Rahmen
- 108: Klappe

## Patentansprüche

1. Vorrichtung (18, 20) zumindest zum Kühlen eines Zylinders eines Extruders,
mit einem in einem Bereich längs des Zylinders (14) des Extruders (10) anordenbaren Strömungskanal (52), und
mit einem Gebläse (88) zum Zuführen eines Kühlluftstroms in den Strömungskanal (52),
mit mindestens einem zwischen Gebläse (88) und Strömungskanal (52) angeordneten Absperrmittel (104), **dadurch gekennzeichnet, dass** das Absperrmittel (104) eine um eine Drehachse schwenkbare Klappe (108) umfasst, und
dass die Klappe (108) derart ausgebildet und angeordnet ist, dass sie ohne Kühlluftstrom durch ein beim Öffnen verformtes elastisch verformbares Element schließt.

2. Vorrichtung nach Anspruch 1, **dadurch gekennzeichnet, dass** die Vorrichtung mindestens einen Kühllufteinlass (92) und mindestens einen Kühlluftauslass hat, wobei sich der Kühllufteinlass und der Kühlluftauslass in unterschiedlicher Höhe angeordnet sind.

3. Vorrichtung nach einem der vorhergehenden Ansprüche, **dadurch gekennzeichnet**, die Klappe (108) nicht elastisch verformbar ist und über ein Scharnier oder ein Gelenk verschwenkbar angeordnet ist.

4. Vorrichtung nach Anspruch 1 oder 2, **dadurch gekennzeichnet, dass** die Klappe elastisch verformbar ist und an einer Seite fest mit einem die Klappenöffnung umgebenden Rahmen (106) verbunden ist und an den anderen Seiten im geschlossenen Zustand auf den die Klappenöffnung umgebenden Rahmen (106) aufliegt.

5. Vorrichtung nach einem der vorhergehenden Ansprüche, **dadurch gekennzeichnet, dass** die Klappe (108) derart angeordnet und ausgebildet ist, dass der durch das Gebläse (88) erzeugte Kühlluftstrom die Klappe (108) öffnet und dass die Klappe (108) durch den Kühlluftstrom offengehalten wird und dass die Klappe (108) ohne den Kühlluftstrom schließt.

6. Vorrichtung nach einem der vorhergehenden Ansprüche, **dadurch gekennzeichnet, dass** die Klappe (108) durch eine Antriebseinheit geöffnet und/oder geschlossen wird, wobei eine Steuereinheit der Vorrichtung (18, 20) die Antriebseinheit zum Öffnen der Klappe (108) mit Aktivierung des Gebläses (88) ansteuert und/oder wobei die Steuereinheit die Antriebseinheit zum Schließen der Klappe (108) mit Deaktivierung des Gebläses (88) ansteuert.

7. Vorrichtung nach einem der vorhergehenden Ansprüche, **dadurch gekennzeichnet, dass** das Absperrmittel eine Membran umfasst, wobei zumindest ein Bereich der Membran durch den vom Gebläse (88) erzeugten Kühlluftstrom derart elastisch verformbar ist, dass eine Durchlassöffnung entsteht, und dass die Durchlassöffnung ohne den Kühlluftstrom wieder schließt.

8. Vorrichtung nach einem der vorhergehenden Ansprüche, **dadurch gekennzeichnet, dass** das Absperrmittel (104) zwischen einem Flansch (96) des Strömungskanals (52) und einem Flansch (94) des Gebläses (88) angeordnet ist.

9. Vorrichtung nach Anspruch 10, **dadurch gekennzeichnet, dass** das Absperrmittel (104) als Zwischenflanschanordnung ausgebildet ist oder mit einem ersten Flansch zum Verbinden mit dem Flansch (96) des Strömungskanals (52) und mit einem zweiten Flansch zum Verbinden mit dem Flansch (94) des Gebläses (88) ausgebildet ist.

10. Vorrichtung nach einem der vorhergehenden Ansprüche, **dadurch gekennzeichnet, dass** das Absperrmittel (104) als Einsteckelement in eine Einschuböffnung des Strömungskanals (52) der Vorrichtung (18, 20) einschiebbar ist.

11. Anordnung mit einem Extruder (10), der einen Zylinder (14) hat und mit mindestens einer Vorrichtung (18, 20) nach einem der vorhergehenden Ansprüche, wobei der Strömungskanal (52) der Vorrichtung (18, 20) oder die Strömungskanäle (52) der Vorrichtungen (18, 20) einen Abschnitt des Zylinders (14) zumindest teilweise umschließt.

12. Anordnung nach Anspruch 11, **dadurch gekennzeichnet, dass** der Strömungskanal (52) der Vorrichtung (18, 20) den Abschnitt des Zylinders (14) umschließt.
